# EUROPEAN PATENT APPLICATION

(11) **EP 4 354 369 A1**
(43) Date of publication of application: **17.04.2024**
(21) Application number: 23203186.4
(22) Date of filing: 12.10.2023
(51) Int. Cl.: G06Q 10/0631, G06Q 10/101, G06Q 50/06, G06Q 50/26

(54) **CONTROL METHOD AND APPARATUS FOR DUAL CARBON, ELECTRONIC DEVICE, STORAGE MEDIUM, AND PROGRAM PRODUCT**

(30) Priority: 14.10.2022 CN 202211261634
(71) Applicant: Sungrow Icarbon Technology Co., Ltd., Hefei, Anhui 230000 (CN)
(72) Inventor: SONG, Shi, Hefei, Anhui (CN)
(74) Representative: Zacco Norway AS

(57) **Abstract**

A control method and apparatus for dual carbon, an electronic device, a storage medium, and a program product are provided. An entire life cycle of the dual carbon is divided into at least two dimensions in time based on a duration of the dual carbon. The control method includes: acquiring, for each of the dimensions, a carbon reduction measure, where the carbon reduction measure includes at least one item of carbon reduction measure information; acquiring a carbon reduction requirement curve, where the carbon reduction requirement curve is a carbon reduction result curve including all the dimensions, and a horizontal axis of the curve represents time; and optimizing the carbon reduction measure aiming at the carbon reduction requirement curve, using an optimization algorithm and based on the carbon reduction measure information, to obtain a modification result. Therefore, costs in carbon reduction are reduced and efficiency for carbon reduction is improved, achieving multi-dimensional optimization throughout the entire life cycle for the dual carbon.

## Description

### TECHNICAL FIELD

The present disclosure relates to the technical field for dual carbon, and in particular to a control method and apparatus for dual carbon, an electronic device, a storage medium, and a program product.

### BACKGROUND

The dual carbon (short for carbon peaking and carbon neutrality) goal is complex and long-term. Cooperation between organizations is necessary to address the challenge of the dual carbon, i.e., achieve carbon peaking and carbon neutrality scientifically. Further, a digital intelligence system, as a collaborative platform, is also necessary to coordinate and optimize the management of approach for the dual carbon. However, the existing approaches to carbon reduction fail to achieve a comprehensive consideration for the entire life cycle of the dual carbon, resulting in low efficiency. As a result, organizations dedicated to the dual carbon fails in the dual carbon assessment or suffer from negative impacts on their operation development. Moreover, the existing approaches to carbon reduction fail to tack effective measures to the technological development and cost fluctuation of carbon reduction measures throughout the entire life cycle of the dual carbon, resulting in high costs and operational risks for the organizations dedicated to the dual carbon.

### SUMMARY

A control method and apparatus for dual carbon, an electronic device, a storage medium, and a program product are provided according to the present disclosure, to achieve multi-dimensional optimization throughout an entire life cycle for the dual carbon, thereby reducing costs and improving efficiency in carbon reduction.

According to an aspect of the present disclosure, a control method for dual carbon is provided. An entire life cycle for the dual carbon is divided into at least two dimensions in time based on a duration of the dual carbon. The method includes: acquiring, for each of the dimensions, a carbon reduction measure, where the carbon reduction measure comprises at least one item of carbon reduction measure information; acquiring a carbon reduction requirement curve, where the carbon reduction requirement curve is a carbon reduction result curve comprising all the dimensions, and a horizontal axis of the curve represents time; and optimizing the carbon reduction measure aiming at the carbon reduction requirement curve, using an optimization algorithm and based on the carbon reduction measure information, to obtain a modification result.

Optionally, the carbon reduction measure information includes at least one of an indicator, an effective period, a task plan, output data, and operation data for the carbon reduction measure.

Optionally, the modification result is obtained by: calculating a carbon reduction curve for the carbon reduction measure based on the carbon reduction measure information; determining a combination of carbon reduction measures for the dimension based on endowment conditions and the carbon reduction curve for the carbon reduction measure, where the endowment conditions comprise at least one of technological maturity, economic efficiency, a carbon reduction result, availability, resource endowment, and security; and modifying the task plan and the output data in the combination, to achieve collaborative optimization throughout the entire life cycle.

Optionally, the determining the combination of carbon reduction measures includes: sorting the carbon reduction measures in order of priorities based on at least one of the endowment conditions; and determining, based on the priorities, the combination and an output of each of the carbon reduction measures in the combination.

Optionally, the modification result is obtained by: acquiring data on factors related to the carbon reduction measure, where the data on factors related to the carbon reduction measure includes at least one of dual carbon policies and regulations, dual carbon standards, organizational operation development plans, organizational operational safety requirements, and technological development of the carbon reduction measure; and modifying, based on the factors related to the carbon reduction measure and the carbon reduction measure, the task plan and the output data of the carbon reduction measure, to achieve a carbon reduction result conforming to the carbon reduction requirement curve.

Optionally, the modification result is obtained by: monitoring the data on factors related to the factors related to the carbon reduction measure and updating the data on factors related to the carbon reduction measure in real time; monitoring an operation status of the carbon reduction measure and acquiring the operation data of the carbon reduction measure in real time; and modifying the combination and the output of the carbon reduction measure based on the updated data and the acquired operation data in real time, to achieve closed-loop dynamic optimization throughout the entire life cycle for the dual carbon.

Optionally, the modifying the combination and the output of the carbon reduction measure includes: modifying, in the dimension, the carbon reduction measure to obtain a synergistic optimized combination of carbon reduction measures and the output of the carbon reduction measure; or modifying, between the dimensions, the carbon reduction measure to obtain a synergistic optimized combination of carbon reduction measures and the output of the carbon reduction measure.

Optionally, the optimization algorithm includes at least one of a deep learning algorithm, an ant colony optimization algorithm, a particle swarm optimization algorithm, and an entropy weight algorithm.

According to another aspect of the present disclosure, a control apparatus for dual carbon is provided. The control apparatus includes: a carbon reduction measure acquisition module, a requirement curve acquisition module and a dual carbon optimization module. The carbon reduction measure acquisition module is configured to acquire, for each of dimensions, a carbon reduction measure. The carbon reduction measure includes at least one item of carbon reduction measure information. The requirement curve acquisition module is configured to acquire a carbon reduction requirement curve. The carbon reduction requirement curve is a carbon reduction result curve including all the dimensions, and a horizontal axis of the curve represents time. The dual carbon optimization module is configured to optimize the carbon reduction measure aiming at the carbon reduction requirement curve, using an optimization algorithm and based on the carbon reduction measure information, to obtain a modification result.

According to another aspect of the present disclosure, an electronic device is also provided. The electronic device includes: at least one processor, and a memory connected in communication with the least one processor. The memory stores a computer program that is executable by the at least one processor. The computer program, when executed by the at least one processor, causes the at least one processor to perform the control method according to the first aspect above.

According to another aspect of the present disclosure, a computer readable storage medium is also provided. The computer readable storage medium stores computer instructions that, when executed by a processor, cause the processor to perform the control method according to the first aspect above.

According to another aspect of the present disclosure, a computer program product including a computer program is also provided. The computer program, when executed by a processor, causes the processor to perform the control method according to the first aspect above.

According to the technical solutions of the embodiments of the present disclosure, the carbon reduction measure and the carbon reduction measure information for each dimension are acquired, and the carbon reduction requirement curve is acquired. Aiming at the carbon reduction requirement curve, the carbon reduction measure is optimized throughout the entire life cycle for the dual carbon in a coordinated manner using optimization algorithm to obtain the modification result, thereby improving the time precision of the dual carbon. The carbon reduction measure can be timely modified as long as the carbon reduction result fails to meet the requirement of the carbon reduction requirement curve, to achieve multidimensional optimization throughout the entire life cycle of the dual carbon, thereby reducing costs and improving efficiency in carbon reduction.

It should be understood that the summary is neither intended to identify keys or important features of the embodiments of the present disclosure nor to limit the present disclosure. Other features of the present disclosure are to be described in the following detailed description.

### BRIEF DESCRIPTION OF THE DRAWINGS

In order to more clearly illustrate technical solutions of the embodiments of the present disclosure, the drawings used in the description of the embodiments are briefly described below. It is apparent that the drawings in the following description show only some embodiments of the present disclosure, and other drawings may be obtained by those skilled in the art based on the drawings without any creative efforts.
Figure 1 is a schematic flowchart illustrating a control method for dual carbon according to an embodiment of the present disclosure;
Figure 2 is a schematic flowchart illustrating step S130 in the control method according to an embodiment of the present disclosure;
Figure 3 shows a carbon reduction curve for a carbon reduction measure according to an embodiment of the present disclosure;
Figure 4 shows a carbon reduction curve for the carbon reduction measure according to another embodiment of the present disclosure;
Figure 5 shows a carbon reduction curve for the carbon reduction measure according to still another embodiment of the present disclosure;
Figure 6 is a schematic flowchart illustrating step S1302 in the control method according to an embodiment of the present disclosure;
Figure 7 is a schematic flowchart illustrating the control method according to another embodiment of the present disclosure;
Figure 8 is a schematic flowchart illustrating the control method according to another embodiment of the present disclosure;
Figure 9 is a structural schematic diagram of a control apparatus for dual carbon according to an embodiment of the present disclosure;
Figure 10 is a structural schematic diagram illustrating the control apparatus according to another embodiment of the present disclosure;
Figure 11 is a structural schematic diagram illustrating the control apparatus according to another embodiment of the present disclosure;
Figure 12 is a structural schematic diagram illustrating the control apparatus according to another embodiment of the present disclosure;
Figure 13 is a structural schematic diagram illustrating the control apparatus according to another embodiment of the present disclosure;
Figure 14 is a schematic diagram of a data storage structure of the control apparatus according to an embodiment of the present disclosure;
Figure 15 is a schematic diagram of the data storage structure of the control apparatus according to another embodiment of the present disclosure;
Figure 16 is a structural schematic diagram of the control apparatus in an application scenario according to an embodiment of the present disclosure;
Figure 17 is a structural schematic diagram of the control apparatus in another application scenario according to an embodiment of the present disclosure; and
Figure 18 is a structural schematic diagram of an electronic device according to an embodiment of the present disclosure.

### DETAILED DESCRIPTION OF THE EMBODIMENTS

The technical solutions of embodiments in the present disclosure are described clearly and completely hereinafter with reference to the drawings for the embodiments of the present disclosure, so that those skilled in the art can better understand the solutions according to the present disclosure. It is apparent that the embodiments described are only some rather than all the embodiments of the present disclosure.

It should be noted that the terms such as "first" and "second" in the specification, claims, and the drawings of the present disclosure are intended to distinguish similar objects rather than describe a particular sequence or a particular order. It should be understood that these terms may be exchanged in an appropriate case, such that the embodiments of the present disclosure can be implemented in an order different from the order shown or described herein. Moreover, the terms "include," "comprise", and any other variants thereof are intended to cover the non-exclusive inclusion. For example, a process, method, system, product, or device that includes a list of steps or units is not necessarily limited to those expressly listed steps or units, but may include other steps or units not expressly listed or inherent in such process, method, product, or device.

A control method for dual carbon is provided according to an embodiment of the present disclosure. There is no limitation in the embodiments of the present disclosure for applications of the control method. For example, the control method is applicable to entities (hereinafter referred to as entities dedicated to dual carbon) such as governments at all levels, enterprises, public institutions, various organizations, and individuals, who are required to carry out carbon neutrality. There is also no limitation in the embodiments of the present disclosure for an application scenario of the control method. For example, the control method is appliable to manufacturing industry, high-emission enterprises, office buildings and the like. The control method may be performed by a control apparatus for dual carbon. The apparatus may be implemented in software and/or hardware, and may be integrated into an electronic device such as a computer, or a server.

With the control method according to the embodiments of the present disclosure, the carbon reduction measure is regulated throughout an entire life cycle for the dual carbon. The entire life cycle may be divided, according to the requirement of the dual carbon and the requirement of carbon reduction measure, in dimensions in time. For example, the entire life cycle may be divided into three dimensions including a long term, a short to medium term, and the present in time. Alternatively, the entire life cycle may be divided into four dimensions including a long term, a medium term, a short term, and the present in time.

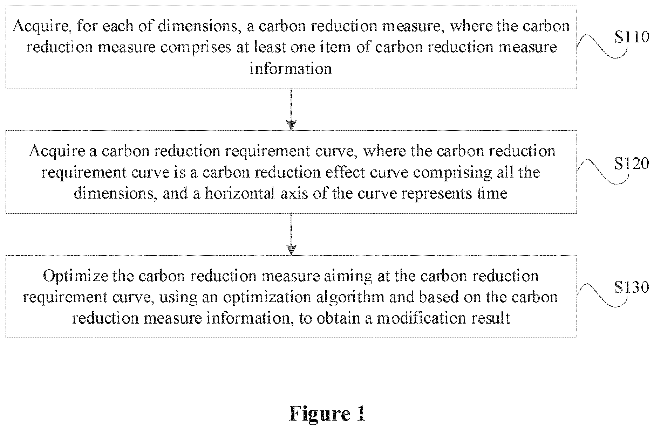

Figure 1 is a schematic flowchart illustrating the control method for dual carbon according to an embodiment of the present disclosure. As shown in Figure 1, the control method includes the following steps S110 to S130.

In S110, a carbon reduction measure for each dimension is acquired. The carbon reduction measure includes at least one item of carbon reduction measure information.

Specifically, dimensions in time correspond to respective carbon reduction measures. For example, the entire life cycle includes three dimensions, namely, a long term, a short to medium term, and the present. Accordingly, the carbon reduction measures may include a long-term reduction measure, a short to medium term reduction measure, and the present carbon reduction measure. The long-term carbon reduction measure is planned, designed, and implemented for a long period of time. The long period of time refers to a large stage for the dual carbon. The long-term carbon reduction measure is strategic and long term, with significant impacts. The short to medium-term carbon reduction measure is planned, designed, and implemented for a short to medium-term period of time. The short to medium term period of time refers to a sub stage for the dual carbon. The present carbon reduction measure is planned, designed, and implemented for the present. The present carbon reduction measure may take effect in a relatively short period of time. The present is a stage in progress within the entire life cycle of the dual carbon.

Each carbon reduction measure includes at least one item of carbon reduction measure information. For example, the carbon reduction measure information includes at least one of an indicator, an effective period, a task plan, output data, and operation data. The indicator refers to a name and a value of the indicator for the carbon reduction measure. For example, the indicator may include an annual amount of carbon reduction, an annual amount of carbon fixation, an annual energy conservation rate, an annual amount of energy conservation, annual offsetting of carbon emissions, and an annual amount of carbon resource utilization. The indicator may be further assigned to departments, production lines, buildings, regions, specific business activities, etc. of the entities, to improve the precision of the control. The effective period refers to a timeline of the entire life cycle of the carbon reduction measure from planning, design, implementation, and operation to the ending of the implementation. These carbon reduction measures have respective effective periods. The task plan refers to a time when the carbon reduction measure starts and a time when carbon reduction measure ends. The output data refers to a ratio of an actual output to a rated output or a total actual output. Moreover, due to the limitation of certain conditions, the output data has an upper limit. The operation data refers to monitoring data of the carbon reduction measure after operated. The operation data may include an actual effect on carbon reduction, investment and operating costs, and operation data of an apparatus, a system or a management measure.

In S 120, a carbon reduction requirement curve is acquired. The carbon reduction requirement curve is a carbon reduction effect curve including each dimension in time, with time as a horizontal axis.

Specifically, the carbon reduction requirement curve represents a requirement to be met by the entity in order to achieve the dual carbon within a period of time. A horizontal axis of the carbon reduction requirement curve represents time, and a vertical axis represents the indicator. The carbon reduction requirement curve shows carbon reduction result for each dimension over time.

In S130, the carbon reduction measure is optimized aiming at the carbon reduction requirement curve, using an optimization algorithm and based on the carbon reduction measure information for the dimension, to obtain a modification result.

The optimization algorithm includes at least one of a deep learning algorithm, an ant colony optimization algorithm, a particle swarm optimization algorithm, and an entropy weight algorithm. The entire life cycle is divided into multiple dimensions in time, and the dual carbon control is conducted for each dimension, to improve the precision of time in the dual carbon control. Therefore, the carbon reduction result for each dimension throughout the entire life cycle meets the carbon reduction requirement conforming to the carbon reduction requirement curve, achieving collaborative optimization. The long-term control of the carbon reduction measure throughout the whole process may result in failure in the carbon reduction result conforming to the carbon reduction requirement curve at preset or within a short period of time, failing to achieve collaborative optimization.

Carbon reduction measure information for all the dimensions is planned in a coordinated manner using the optimization algorithm, for optimizing the implementation of carbon reduction measure for each dimension, in order to timely modify the present carbon reduction measure or the short to medium term carbon reduction measure so as to conform to the carbon reduction requirement curve when the modification result does not meet the carbon reduction requirement curve due to external factors, thereby reducing carbon reduction costs, and improving carbon reduction efficiency to realize collaborative optimization throughout the entire life cycle for dual carbon.

According to the technical solution of this embodiment, the carbon reduction measure and the carbon reduction measure information for each dimension are acquired, and the carbon reduction requirement curve is acquired. The carbon reduction measure for each dimension throughout the entire life cycle is planned using an optimization algorithm in a coordinated manner aiming at the carbon reduction requirement curve, to obtain the modification result, thereby improving the precision of time for the dual carbon. In a case that the carbon reduction result does not match the carbon reduction requirement curve, the carbon reduction measure can be timely modified to achieve multidimensional optimization throughout the entire life cycle, thereby reducing carbon reduction costs and improving efficiency.

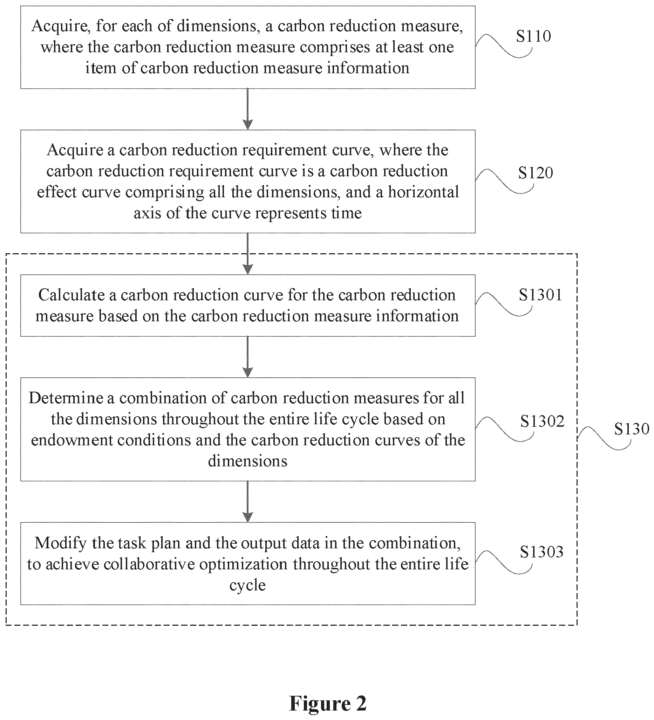

Optionally, Figure 2 is a schematic flowchart of step S130 in the control method according to an embodiment of the present disclosure. Based on the above embodiment, as shown in Figure 2, the modification result is obtained be performing S1301 to S1303.

In S1301, for each dimension, a carbon reduction curve for the carbon reduction measure is calculated based on the carbon reduction measure information.

Specifically, the carbon reduction curve is obtained based on the indicator and the effective period in the carbon reduction measure information. A horizontal axis of the carbon reduction curve represents a life cycle of the carbon reduction measure, and a vertical axis represents a carbon reduction result. The horizontal axis of the carbon reduction curve is modified by modifying the task plan. The vertical axis of the carbon reduction curve is modified by modifying the output data. The carbon reduction curve represents the carbon reduction result of carbon reduction measure over time. In addition, the carbon reduction curve can be adapted to locations or dual carbon regulations.

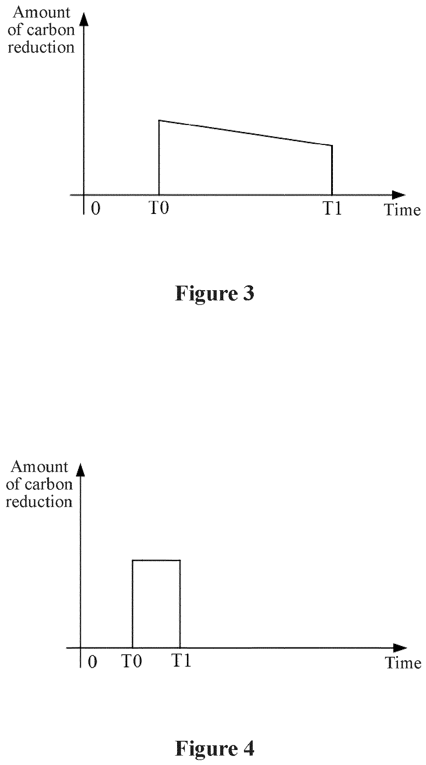

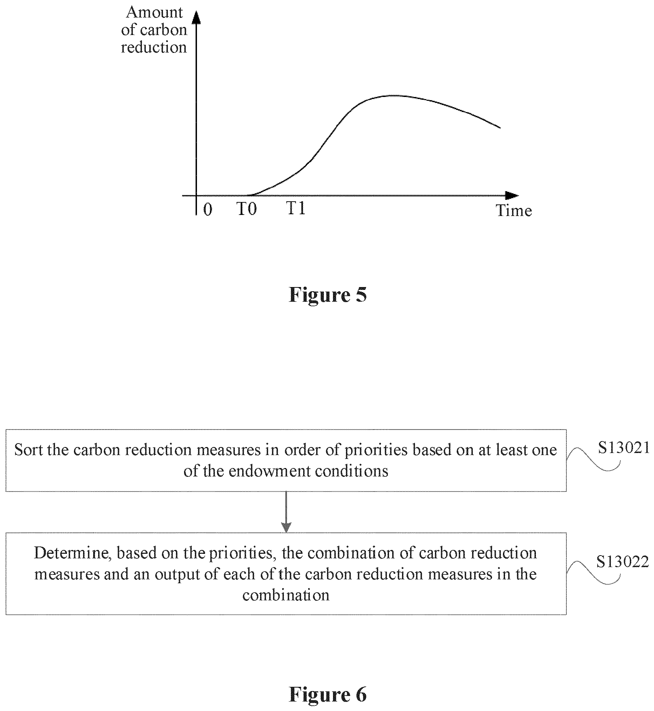

As an example, Figure 3 shows a carbon reduction curve for a carbon reduction measure according to an embodiment of the present disclosure, Figure 4 shows a carbon reduction curve for a carbon reduction measure according to another embodiment of the present disclosure, and Figure 5 shows a carbon reduction curve for a carbon reduction measure according to another embodiment of the present disclosure. Figure 3 shows a carbon reduction curve for a carbon reduction measure of a "rooftop photovoltaic" project. According to feasibility data of the "rooftop photovoltaic" project, an amount of carbon reduction is obtained by multiplying each kilowatt hour of electricity emitted from a photovoltaic module by a carbon emission factor for each kilowatt hour of electricity generated by a local power grid. The carbon reduction curve shown in Figure 3 is obtained from an amount of carbon reduction and a period of time spent on electricity generation. In the carbon reduction curve in Figure 3, a time interval from 0 to T0 represents a period of time of the "rooftop photovoltaic" project from start of design, construction to putting into operation. A time interval from T0 to T1 represents an operating life of the photovoltaic module in the "rooftop photovoltaic" project. That is, since a moment T1, the photovoltaic module stops generating electricity, and therefore the carbon reduction result cannot be achieved.

Figure 4 shows a carbon reduction curve for a carbon reduction measure of "purchasing green electricity". The carbon reduction curve shown in Figure 4 is obtained by purchasing electricity of one month in advance for a following month. A time interval from 0 to T0 represents a period of time for purchasing green electricity, and a time interval from T0 to T1 represents a carbon reduction result from the green electricity. The purchased amount of the green electricity for this month has been used up at T1 and therefore no carbon reduction result is generated. It is necessary to purchase the green electricity for the next month.

Figure 5 shows a carbon reduction curve for a carbon reduction measure of "afforestation". In a vegetation carbon fixation formula G_{plant carbon fixation}=1.63R_{carbon} × A ×B_{year} stipulated in the national forestry standard, G_{plant carbon fixation} represents an annual amount of vegetation carbon fixation. R_{carbon} represents the carbon content in carbon dioxide, and is 27.27%. A represents an area of a standing forest, and B_{year} represents productivity net per unit of a standing forest. The national forestry standard refers to the Forest Ecosystem Service Function Evaluation Specification, namely LY/T1721-2008. As shown in Figure 5, a time interval from 0 to T0 represents a period for cultivating a forest. A time interval since T0 represents a carbon reduction result for the afforestation, which reaches a peak at T1.

In S1302, a combination of carbon reduction measures for all the dimensions throughout the entire life cycle is determined based on endowment conditions and carbon reduction curves for all the carbon reduction measures. The endowment conditions include at least one of technological maturity, economic efficiency, a carbon reduction result, availability, resource endowment, and security.

Specifically, the combination of carbon reduction measures and the output data of the carbon reduction measures for the dimensions are preliminarily determined with the carbon reduction requirement curve as a goal, based on the carbon reduction curves for the carbon reduction measures. The endowment conditions may include at least one of technological maturity, economic efficiency, a carbon reduction result, availability, resource endowment, and security. For example, the economic efficiency may include a carbon reduction cost per unit of the carbon reduction measure. The carbon reduction cost per unit refers to a cost of the carbon reduction measure to reduce 1 ton of carbon emissions. The carbon reduction cost may be obtained from the carbon reduction cost per unit. Furthermore, an optimal combination of carbon reduction measures and optimal output data of the carbon reduction measure may be selected from the preliminarily determined combination of carbon reduction measures and the output data of the carbon reduction measure respectively based on the endowment condition. In addition, for each dimension, there may be one or more carbon reduction measures, to determine the most suitable combination of carbon reduction measures. For each carbon reduction measure for each time dimension, the output data of the carbon reduction measure is modified to achieve the goal of the carbon reduction requirement curve.

In S1303, for each dimension, the task plan and the output data in the combination of carbon reduction measures are modified, to achieve collaborative optimization throughout the entire life cycle of the dual carbon.

Specifically, an implementation starting time and an implementation ending time for each carbon reduction measure in the combination of carbon reduction measures and the output of the carbon reduction measure are modified For example, during a period of time with a low carbon reduction requirement, the carbon reduction measure with a less carbon reduction effect in a case of reaching an upper limit of a carbon reduction measure is taken, and the output data of the carbon reduction measure is modified. If the task plan of a carbon reduction measure with less carbon reduction effect is implemented later, the task plan of this carbon reduction measure may be appropriately advanced to achieve collaborative optimization throughout the entire life cycle of the dual carbon.

Optionally, Figure 6 is a schematic flowchart illustrating step S1302 in the control method according to an embodiment of the present disclosure. Based on the above embodiments, as shown in Figure 6, the determination of the combination of carbon reduction measures includes S13021 and S13022.

In S 13021, carbon reduction measures are sorted in order of priorities at least one of the endowment conditions.

Specifically, the carbon reduction measures may be sorted based on the endowment conditions, and the carbon reduction measure with a better endowment condition (such as a lower carbon reduction cost per unit) may be determined as having a higher priority.

In S13022, a combination of carbon reduction measures for each dimension and an output of each carbon reduction measure in the combination are determined based on the priorities.

Specifically, in order to modify the carbon reduction measure for each time dimension so as to determine the combination of carbon reduction measures, a carbon reduction measure with a higher priority sorting is firstly selected, and the output data of each carbon reduction measure is modified, to achieve the collaborative optimization throughout the entire life cycle for the dual carbon.

For example, a total amount of carbon reduction represented in the carbon reduction requirement curves for years of 2022, 2023, 2024, 2025, and 2026 is 1 million tons, 1.1 million tons, 1.2 million tons, 1.4 million tons, and 1.6 million tons, respectively. The task plan and the output data are modified to match the carbon reduction effect obtained by combining the carbon reduction measures with the carbon reduction requirement curve in terms of time cycle and the total amount of carbon reduction. The combination of the carbon reduction measures and the output with a higher priority are firstly selected, so that the total amount of carbon reduction of carbon reduction measures each having an output period from the years of 2022, 2023, 2024, 2025, to 2026, can reach 1 million tons, 1.1 million tons, 1.2 million tons, 1.4 million tons, and 1.6 million tons, respectively. Due to the endowment conditions and standard limitations, etc., the output data of some of carbon reduction measures has an upper limit. For example, when a carbon reduction measure A included in the combination with a high priority sorting is selected, and the output data of the carbon reduction measure A is modified to its upper limit. If the carbon reduction effect conforming to the carbon reduction requirement curve is still not achieved, a carbon reduction measure B whose priority second only to the carbon reduction measure A is selected to achieve collaborative optimization throughout the entire life cycle for the dual carbon. In this way, the optimal combination of carbon reduction measures is selected and the task plan and the output data are modified for dual carbon control, so that the cost for the entities dedicated to dual carbon to participate in the dual carbon control is minimized, and the impact of preforming dual carbon control on the development of the entities dedicated to the dual carbon control is reduced. This not only achieves the result of the dual carbon control conforming to the carbon reduction requirement curve, but also meets the operational and development requirements of the entities dedicated to the dual carbon control.

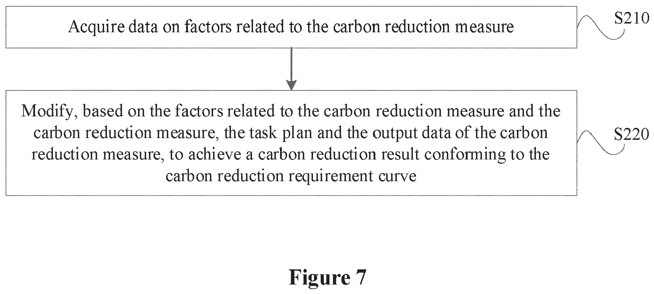

Optionally, Figure 7 is a schematic flowchart illustrating the control method according to another embodiment of the present disclosure. Based on the above embodiments, as shown in Figure 7, the modification result is obtained by performing the following steps S210 to S220.

In S210, data on factors related to the carbon reduction measures is acquired, where the data on factors related to the carbon reduction measures includes at least one of dual carbon policies and regulations, dual carbon standards, organizational operation development plans, organizational operational safety requirements, and technological development of a carbon reduction measure.

Specifically, the factors related to the carbon reduction measures are various factors affecting the combination of carbon reduction measures and the output data of the carbon reduction measure, and may include one or more factors, which is not limited herein. The dual carbon policies and regulations, and the dual carbon standards include mandatory or voluntary policies and regulations for voluntary carbon reduction designated by government-related agencies, as well as rules and standards formulated by dual carbon organizations. For example, dual carbon related policies may include dual carbon planning of governments at all levels, dual carbon related incentive policies, and dual carbon related punishment policies. The dual carbon regulations may include air pollution prevention and control law, energy conservation law, etc. The dual carbon related standards may include green factories and low-carbon buildings. The dual carbon organizations are various organizations and related industry standardization organizations established for the purpose of promoting carbon reduction, carbon neutrality, energy conservation and emission reduction. For example, the dual carbon organizations may include RE100, EP100, ISO, etc. According to the purpose and object-oriented nature for the dual carbon, the dual carbon organizations may be domestic or international organizations. The organizational operation development plans may include a business growth plan, a production growth plan, and an organizational dual carbon plan, etc. The technological development of the carbon reduction measure may include low-carbon substitution, low emission substitution, energy conservation and emission reduction, industrial energy conservation, carbon fixation, and carbon resource utilization.

In S220, for each of the dimensions, the task plan and the output data are modified based on the factors related to the carbon reduction measures and the carbon reduction measure for the dimension to achieve the carbon reduction effect conforming to the carbon reduction requirement curve.

Specifically, the factors related to the carbon reduction measures include indicator data, operation data, and result prediction data. An implementation starting time of the carbon reduction measure for the dimension is modified based on the various data of the factors related to the carbon reduction measures, that is, a time period in which the carbon reduction measure takes affect is modified, and the output data of the carbon reduction measure dimension is also modified.

For example, under the requirement of a dual carbon plan made by government A, an entity B dedicated to the dual carbon is to reduce carbon emissions by 1 million tons, 1.1 million tons, and 1.2 million tons in the years of 2022, 2023, and 2024, respectively. Based on the requirement of the dual carbon plan made by the government A, the entity B dedicated to the dual carbon adopts a combination of carbon reduction measures a, b, and c. According to a carbon reduction requirement curve to be met by the entity B, the carbon reduction measure a is modified to start from the year of 2022 and end in the year of 2023. The carbon reduction measure b is modified to start from the year of 2023 and end in the year of 2024. The carbon reduction measure c is modified to start from the year of 2022 and end in the year of 2024. In addition, the output of the carbon reduction measure a is modified to be 80%. The output of the carbon reduction measure b is modified to be 70%. The output of the carbon reduction measure c is modified to be 90%. By implementing the carbon reduction measures based on the modification result described above, the entity B can achieve lower carbon reduction costs, higher carbon reduction efficiency, and collaborative optimization throughout the entire life cycle for the dual carbon.

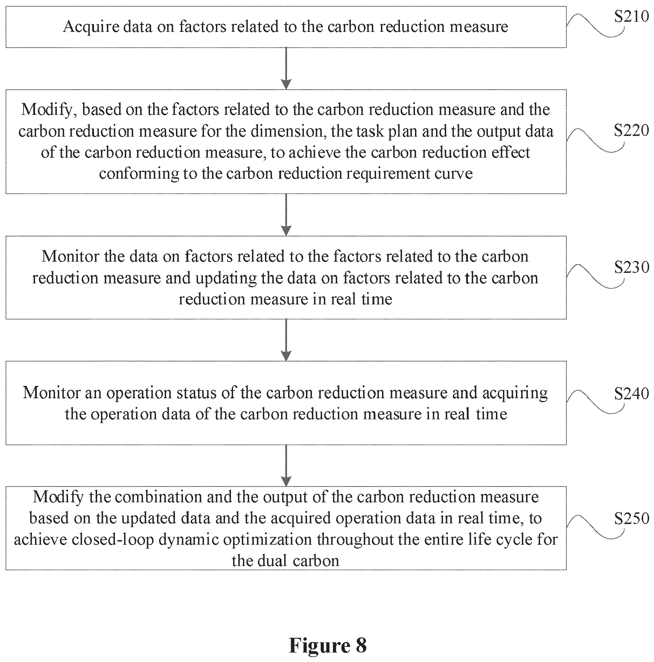

Optionally, Figure 8 is a schematic flowchart illustrating the control method according to another embodiment of the present disclosure. Based on the above embodiments, as shown in Figure 8, the modification result is obtained by performing the following steps S210 to S250.

In S210, the data on factors related to the carbon reduction measures is acquired.

In S220, for each of the dimensions, the task plan and the output data for each carbon reduction measure are modified based on the factors related to the carbon reduction measures and the carbon reduction measure for the dimension, to achieve the carbon reduction result conforming to the carbon reduction requirement curve.

In S230, the data on the factors related to the carbon reduction measures is monitored and updated in real time.

Specifically, the factors related to the carbon reduction measures have a certain impact on the carbon reduction result, and therefore is monitored in real time. Alternatively, when there are changes in the data on the factors related to the carbon reduction measures, a prompt may be provided to update the data on the factors related to the carbon reduction measures in timely. It should be noted that a period of time for monitoring in real time the data on the factors related to the carbon reduction measures varies from carbon reduction measures of one dimension to another.

As an example, for the present carbon reduction measure, data on the factors related to the carbon reduction measures is monitored in real time due to a short effective period. For the short to medium-term carbon reduction measure, the data on the factors related to the carbon reduction measures is monitored regularly due to a relatively long effective period, for example, at three-month or six-month intervals, which is not limited here. For a long-term carbon reduction measure, the factors related to the carbon reduction measures is monitored regularly due to the long effective period, for example, at one-year or two-year intervals. The period for monitoring the data on the factors related to the carbon reduction measures is adaptive to the duration for implementing the carbon reduction measure, to update the data on the factors related to the carbon reduction measures timely.

In S240, for each of the dimensions, an operation status of the carbon reduction measure for the dimension is monitored in real time, and operation data of the carbon reduction measure is acquired.

Specifically, for each of the dimensions, the carbon reduction measure is modified aiming at the carbon reduction requirement curve, based on the factors related to the carbon reduction measures, to obtain an appropriate combination of carbon reduction measures, and start to implement the carbon reduction measure. During the implementation of the carbon reduction measure, the operation data is acquired in real time. It should be noted that a same period for monitoring or a different period for monitoring may be adopted in terms of obtaining in real time the operation data of the carbon reduction measure described here and monitoring in real time the data on the factors related to the carbon reduction measures described above, which is not limited herein.

In S250, for each of the dimensions, the combination and the output of the carbon reduction measure are modified in real time based on the updated data on the factors related to the carbon reduction measures and the operation data of the carbon reduction measure, to achieve closed-loop dynamic optimization throughout the entire life cycle for the dual carbon.

Specifically, when a change in the data on the factors related to the carbon reduction measures is detected or the combination and the output at present fail to achieve the carbon reduction result conforming to the carbon reduction requirement curve, the combination of is modified in real time to obtain an updated combination, and the output data is modified. During the real time control, in each dimension, each carbon reduction measure is modified to obtain a synergistic optimized combination of carbon reduction measures and the output of the carbon reduction measure. Alternatively, between dimensions, the carbon reduction measure is modified to obtain a synergistic optimized combination of carbon reduction measures and the output of the carbon reduction measure. Moreover, one or more carbon reduction measures may be taken within one dimension, and the same carbon reduction measure may also be implemented in one or more dimensions.

As an example, the carbon reduction measure may be modified in real time between dimensions. When it comes to a medium term carbon reduction measure of "purchasing a green certificate", if the price of a green certificate at the present is detected to be at a low point and is to rise in the future, the present carbon reduction measure of "purchasing a green certificate" is prioritized, and the effective period of the carbon reduction measure meets the carbon reduction requirement of the present carbon reduction measure. Therefore, the carbon reduction measure of "purchasing a green certificate" is modified to be implemented in the present dimension. In addition, the output of the present carbon reduction measure with high costs may be reduced accordingly or the task plan of the present carbon reduction measure with high costs may be delayed, and the implementation of the present carbon reduction measure with high costs may be postponed.

In each dimension, the carbon reduction measure may be monitored in real time. The present carbon reduction measure may include "rooftop photovoltaics", "an energy storage system stores energy ", and "energy efficiency management for load". During a period of ample sunlight such as noon, the carbon reduction measure "rooftop photovoltaics" has high power, and a photovoltaic module generates sufficient electricity. In order to prevent sufficient electricity from being wasted, the output of the carbon reduction measure of "energy efficiency management for load " is modified, so that more loads can consume the electricity generated by the photovoltaic module during the period of generating sufficient electricity, thereby saving electricity in the grid and reducing carbon emissions from grid power generation. If the electricity generated by the photovoltaic module fails to be fully consumed by the loads, the carbon reduction measure of "an energy storage system storing energy" may be implemented to store excess electricity in the energy storage system. When the electricity requested by the load exceeds the power production of the photovoltaic module, the energy storage system may output the stored energy to the load, so as to save the electricity in the grid, thereby reducing the amount of carbon emissions, and achieving collaborative optimization of each carbon reduction measure at the present.

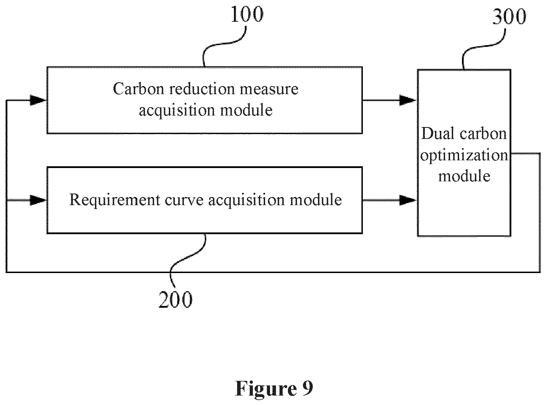

A control apparatus for dual carbon is also provided according to an embodiment of the present disclosure. Figure 9 is a structural schematic diagram of the control apparatus. As shown in Figure 9, the control apparatus includes a carbon reduction measure acquisition module 100, a requirement curve acquisition module 200, and a dual carbon optimization module 300.

The carbon reduction measure acquisition module 100 is configured to acquire a carbon reduction measure for each of dimensions. The carbon reduction measure includes at least one item of carbon reduction measure information.

The requirement curve acquisition module 200 is configured to acquire a carbon reduction requirement curve. The carbon reduction requirement curve is a carbon reduction effect curve includes all the dimensions with time as its horizontal axis.

The dual carbon optimization module 300 is configured to optimize the carbon reduction measure aiming at the carbon reduction requirement curve, using an optimization algorithm based on the carbon reduction measure information, to obtain a modification result.

The control apparatus may perform the control method according to any one of the embodiments of the present disclosure, and therefore has functional modules corresponding to the method and can achieve the same beneficial effects as the control method. Specifically, the carbon reduction measure acquisition module 100 outputs the carbon reduction measures for the dimensions to the dual carbon optimization module 300. The requirement curve acquisition module 200 outputs the carbon reduction requirement curve representing the carbon reduction result to be achieved to the dual carbon optimization module 300. In addition, the carbon reduction measure acquisition module 100 may also accept the modification result of the dual carbon optimization module 300.

Because the entire life cycle for the dual carbon may be divided according to the requirement of the dual carbon and the requirement of the carbon reduction measure, the carbon reduction measure acquisition module 100 may also be divided into multiple units based on dimensions. A structure of the control apparatus divided according to various dimensions is explained in the following embodiments.

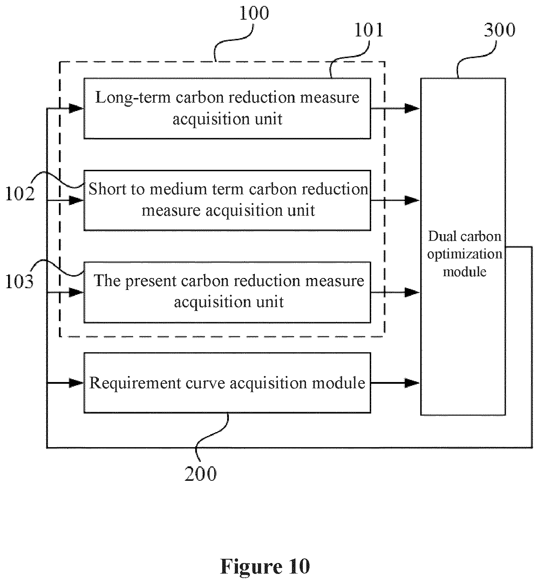

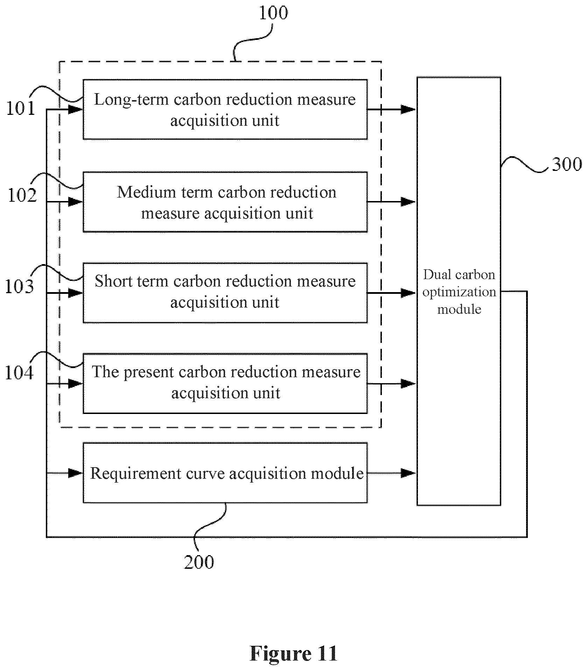

Optionally, Figure 10 is a structural schematic diagram of the control apparatus according to another embodiment of the present disclosure. Figure 11 is a structural schematic diagram of the control apparatus n according to another embodiment of the present disclosure. Based on the above embodiments, as shown in Figure 10, the carbon reduction measure acquisition module 100 includes: a long-term carbon reduction measure acquisition unit 101, a short to medium term carbon reduction measure acquisition unit 102, and a present carbon reduction measure acquisition unit 103. The long-term carbon reduction measure acquisition unit 101, the short to medium term carbon reduction measure acquisition unit 102, and the present carbon reduction measure acquisition unit 103 receive the modification of the dual carbon optimization module 300.

Alternatively, as shown in Figure 11, the carbon reduction measure acquisition module 100 includes: a long term carbon reduction measure acquisition unit 101, a medium term carbon reduction measure acquisition unit 102, a short term carbon reduction measure acquisition unit 103, and a present carbon reduction measure acquisition unit 104. The long term carbon reduction measure acquisition unit 101, the medium term carbon reduction measure acquisition unit 102, the short term carbon reduction measure acquisition unit 103, and the present carbon reduction measure acquisition unit 104 receive the modification of the dual carbon optimization module 300.

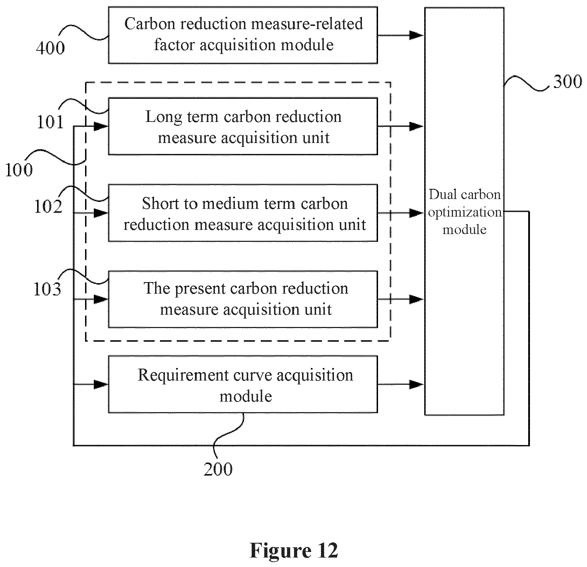

Optionally, Figure 12 is structural schematic diagram of the control apparatus according to another embodiment of the present disclosure. Based on the above embodiments, as shown in Figure 12, the control apparatus includes a carbon reduction measure-related factor acquisition module 400. The carbon reduction measure-related factor acquisition module 400 is configured to output updated factors related to the carbon reduction measures to the dual carbon optimization module 300, for the dual carbon optimization module 300 to modify in real time the combination and the output of based on the updated factors related to the carbon reduction measures, thereby achieving collaborative optimization throughout the entire life cycle for the dual carbon.

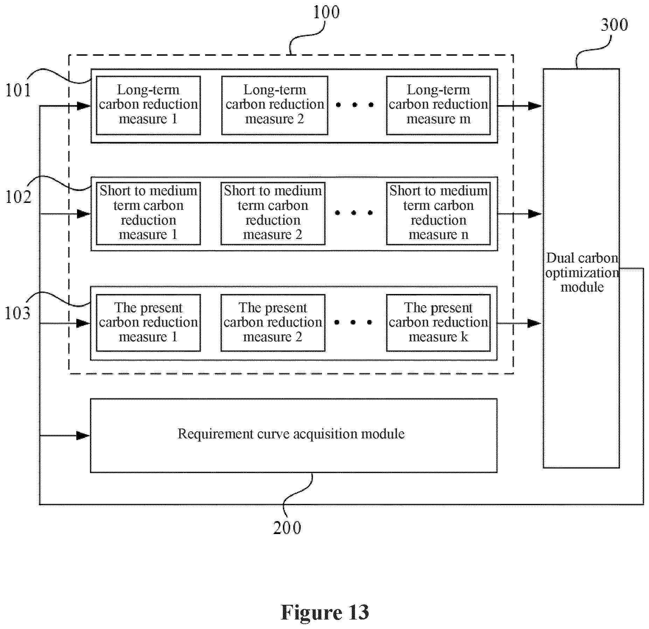

Optionally, Figure 13 is a structural schematic diagram of the control apparatus according to another embodiment of the present disclosure. Based on the above embodiments, as shown in Figure 13, the long term carbon reduction measure acquisition unit 101 includes a long-term carbon reduction measure 1, a long-term carbon reduction measure 2, ..., and a long-term carbon reduction measure m. The short to medium term carbon reduction measure acquisition unit 102 includes a short to medium term carbon reduction measure 1, a short to medium term carbon reduction measure 2, ..., and a short to medium term carbon reduction measure n. The present carbon reduction measure acquisition unit 103 includes a present carbon reduction measure 1, a present carbon reduction measure 2, ..., a present carbon reduction measure k. M, n, and k are all positive integers greater than or equal to 1, that is, each carbon reduction measure acquisition unit may include one or more carbon reduction measures.

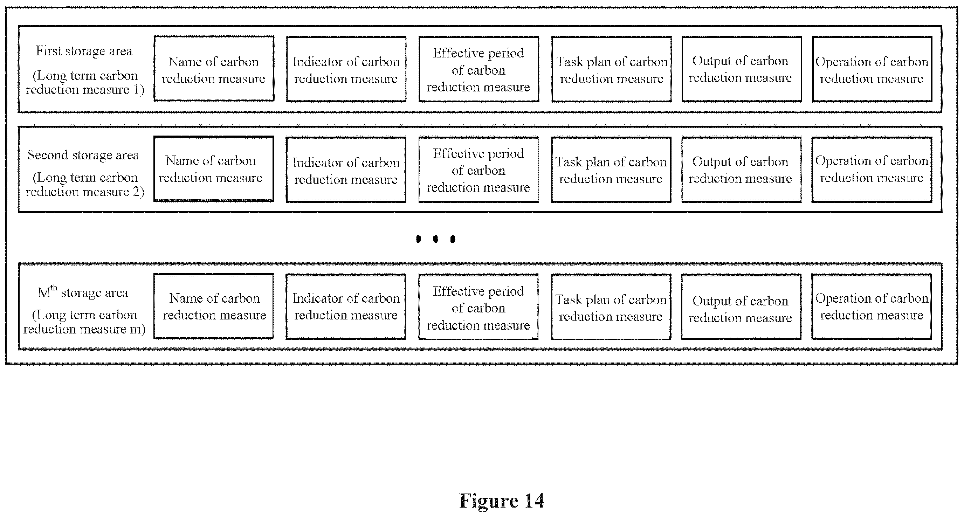

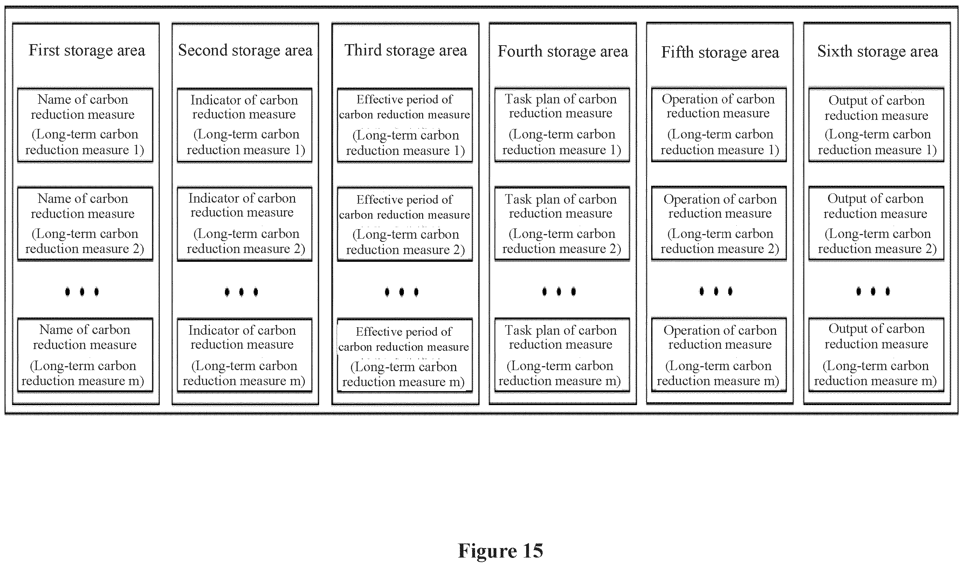

Optionally, Figure 14 is a schematic diagram of a data storage structure of the control apparatus according to an embodiment of the present disclosure. Figure 15 is a schematic diagram of a data storage structure of the control apparatus according to another embodiment of the present disclosure. Based on the above embodiments, as shown in Figure 14, the data storage structure for each of the long term carbon reduction measure acquisition unit 101, the short to medium term carbon reduction measure acquisition unit 102, and the present carbon reduction measure acquisition unit 103 may be horizontal. For example, the long-term carbon reduction measure acquisition unit 101 includes a first storage area, a second storage area, ..., and an mth storage area, each of which stores carbon reduction measure information for the carbon reduction measure. For example, the carbon reduction measure information may include: an indicator, an effective period a task plan, output data, and operation data of the carbon reduction measure.

As shown in Figure 15, the data storage structure for each of the long term carbon reduction measure acquisition unit 101, the short to medium term carbon reduction measure acquisition unit 102, and the present carbon reduction measure acquisition unit 103 may be vertical. For example, the long term carbon reduction measure acquisition unit 101 includes a first storage area, a second storage area,..., and an mth storage area, each of which stores the same carbon reduction measure information for the carbon reduction measure. For example, Figure 15 shows that the long term carbon reduction measure acquisition unit 101 includes a first storage area, a second storage area, a third storage area, a fourth storage area, a fifth storage area, and a sixth storage area. The second storage area includes an indicator for a long-term carbon reduction measure 1, an indicator for a long-term carbon reduction measure 2,..., and an indicator for a long-term carbon reduction measure m. The third storage area includes an effective period for the long-term carbon reduction measure 1, an effective period for the long-term carbon reduction measure 2, ..., and an effective period for the long-term carbon reduction measure m. The carbon reduction measure information stored in other storage areas is shown in Figure 15 and is not described in detail here.

For carbon reduction measure acquisition units with different storage structures, the horizontal storage structure facilitates the retrieval of the carbon reduction measure information corresponding to the carbon reduction measure, and the vertical storage structure facilitates the modification, deletion, or addition of one item of the carbon reduction measure information for the carbon reduction measure.

Figures 14 and 15 respectively show the horizontal storage structure and the vertical storage structure. In each storage area, each item of carbon reduction measure information has a unique ID number. Each item of carbon reduction measure information establishes a mapping relationship with an ID number of a name of the carbon reduction measure in the carbon reduction measure information. The name of the carbon reduction measure is optional information in the carbon reduction measure information. In order to distinguish different carbon reduction measures, the carbon reduction measure information usually includes the name of the carbon reduction measure. The dual carbon optimization module 300 can quickly and accurately acquire each item of the carbon reduction measure information according to the mapping relationship based on the ID number.

It should be noted that for the horizontal storage structure, each item of the carbon reduction measure information stored in the storage area can be directly acquired. For the vertical storage structure, multiple pieces of carbon reduction measure information stored in each storage area are in one-to-one correspondence with names. Each piece of carbon reduction measure information has a unique ID number, and the name of each carbon reduction measure also has a unique ID number. A mapping relationship is established between the ID number of the carbon reduction measure information and the ID number of the name of carbon reduction measure. Multiple pieces of carbon reduction measure information stored in the storage area may be not in one-to-one correspondence with the name. The same carbon reduction measure information stored in the storage area alone may have multiple ID numbers, to establish a mapping relationship with names of the multiple carbon reduction measures, thereby facilitate data acquisition.

For example, a carbon reduction measure of "rooftop photovoltaics" and a carbon reduction measure of "purchasing green electricity" are included in the present carbon reduction measure acquisition module 103, and the effective periods of the carbon reduction measure of both the carbon reduction measure of "rooftop photovoltaics" and the carbon reduction measure of "purchasing green electricity" are one month. Therefore, the two pieces of identical carbon reduction measure information with the effective period of one month are unnecessarily stored in the storage area for the effective period. Instead, only one piece of the carbon reduction measure information with the effective period of one month is stored. This piece of the carbon reduction measure information has two ID numbers. A mapping relationship is established between the two ID numbers and an ID number of the carbon reduction measure of "rooftop photovoltaics" and an ID number of the carbon reduction measure of "purchasing green electricity". This facilitates accurate access to the carbon reduction measure information, reduces data storage capacity, and saves storage space. The storage format of data may be enumeration, KEY-VALUE, and/or JSON string, etc.

It should be noted that Figures 14 and 15 only show the general data storage structure of the carbon reduction measure information for the carbon reduction measure. Each carbon reduction measure in the carbon reduction measure acquisition module 100 may also include other specified carbon reduction measure information. Therefore, only specified carbon reduction measure information of some of carbon reduction measures is stored in the data storage area.

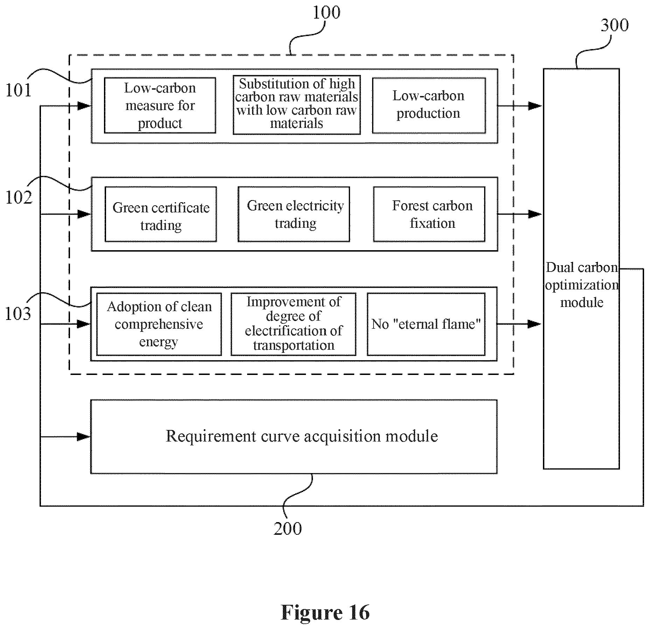

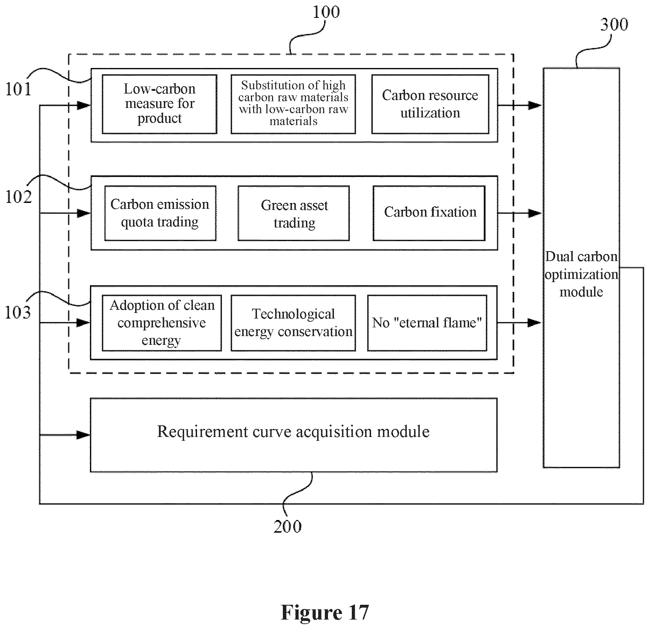

Optionally, Figure 16 is a structural schematic diagram of the control apparatus in an application scenario according to an embodiment of the present disclosure. Figure 17 is a structural schematic diagram of the control apparatus in another application scenario according to an embodiment of the present disclosure. Based on the above embodiments, as shown in Figure 16, the long term carbon reduction measure in the long-term carbon reduction measure acquisition unit 101 includes a product low-carbon design measure, substitution of high carbon raw materials with low-carbon raw materials, and low-carbon production. The short to medium term carbon reduction measure in the short to medium term carbon reduction measure acquisition unit 102 includes green certificate trading, green electricity trading, and forest carbon fixation. The present carbon reduction measure in the present carbon reduction measure acquisition unit 103 includes adoption of clean comprehensive energy, transportation and logistics energy-saving measure to improve the degree of electrification of transportation, and an office energy-saving measure of no "eternal flame". The control apparatus shown in Figure 16 is suitable for manufacturing enterprises to implement the dual carbon.

As shown in Figure 17, the long term carbon reduction measure in the long term carbon reduction measure acquisition unit 101 includes a product low-carbon measure, substitution of high carbon raw materials with low-carbon raw materials and carbon resources utilization. The short to medium term carbon reduction measure in the short to medium term carbon reduction measure acquisition unit 102 includes carbon emission quota trading, green asset trading, and carbon fixation. The present carbon reduction measure in the present carbon reduction measure acquisition unit 103 includes adoption of clean comprehensive energy, an industrial energy-saving measure for technological energy conservation, and an office energy-saving measure of no "eternal flame". The control apparatus shown in Figure 17 is suitable for enterprises with high carbon emissions, such as thermal power plants, cement plants, to implement the dual carbon.

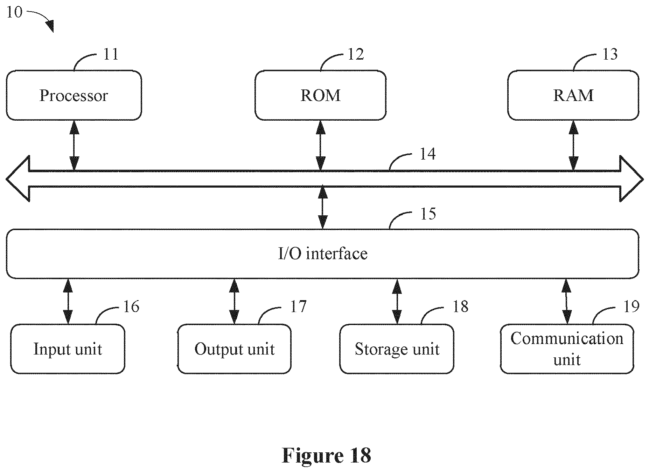

An electronic device is also provided according to an embodiment of the present disclosure. Figure 18 is a schematic structural diagram of the electronic device. The electronic device is intended to represent various forms of digital computers, such as a laptop, a desktop computer, a working platform, a personal digital assistant, a server, a blade server, a mainframe computer, and other suitable computers. The electronic device may also represent various forms of mobile devices, such as personal digital processor, cellular phones, smartphones, and other similar computing devices. The components, the connections and relationships of the components and the functions of the components shown herein are only examples and are not intended to limit the implementation of the present disclosure described and/or claimed in the present disclosure.

As shown in Figure 18, the electronic device 10 includes at least one processor 11 and a memory connected in communication with the at least one processor 11. The memory may be, for example, a read-only memory (ROM) 12, a random access memory (RAM) 13, and stores computer programs executable by the at least one processor. The processor 11 may perform various appropriate actions and processes based on the computer programs stored in the read-only memory (ROM) 12 or loaded into the random access memory (RAM) 13 from a storage unit 18. The RAM 13 also stores various programs and data for the electronic device 10 to perform an operation. The processor 11, the ROM 12 and the RAM 13 are connected to each other via a bus 14. An Input/Output (I/O) interface 15 is also connected to the bus 14.

Components in the electronic device 10 connected to the I/O interface 15includes: an input unit 16, such as a keyboard, and a mouse; an output unit 17, such as various types of displays, and speakers; a storage unit 18, such as a disk, and an optical disc; and a communication unit 19, such as a network card, a modem, and a wireless communication transceiver. The communication unit 19 allows the electronic device 10 to exchange information/data with other devices over a computer network such as the Internet and/or various telecommunication networks.

The processor 11 may include various general and/or dedicated processing components capable of processing and computing. Some examples of the processor 11 include but are not limited to central processing units (CPUs), graphics processing units (GPUs), various dedicated artificial intelligence (AI) computing chips, various processors running machine learning model algorithms, digital signal processors (DSPs), and any suitable processors, controllers, microcontrollers, etc. The processor 11 performs the methods and processes described above, for example, the control method.

In some embodiments, the control method may be implemented as a computer program, which is tangibly included in a computer-readable storage medium, for example, the storage unit 18. In some embodiments, some or all of the computer program may be loaded and/or installed on the electronic device 10 via the ROM 12 and/or the communication unit 19. When the computer program is loaded into the RAM 13 and is executed by the processor 11, one or more steps of the control method are performed. Alternatively, in other embodiments, the processor 11 is configured to perform the control method by any other appropriate means (for example, by virtue of firmware).

In the context of the present disclosure, the computer readable medium may be a tangible medium that may include or store a program to be used by an instruction execution system, apparatus or device or in combination with the instruction execution system, apparatus or device. The computer readable storage medium may include, but is not limited to, an electronic, magnetic, optical, electromagnetic, infrared, or semiconductor system, apparatus or device, or any proper combination of them. Optionally, the computer readable storage medium may be a machine readable signal medium. More specific examples of the machine readable storage medium may include, an electrical connection via one or more wires, a portable computer disk, a hard disk, a random access memory (RAM), a read only memory (ROM), an erasable programmable read only memory (EPROM or Fast flash memory), an optical fiber, a portable compact disc read only memory (CD-ROM), an optical storage device, a magnetic storage device or any suitable combination of them.

The system and technology described herein may be implemented in a computing system(for example, serving as a data server) that includes backend components, a computing system (for example, an application server) that includes middleware components, a computing system (for example, a user computer with a graphical user interface or web browser through which users can interact with the implementation of the system and technology described herein) that includes front-end components, or a computing system that includes any combination of such back-end components, middleware components, or front-end components. The components of the system may be interconnected through any form or medium of digital data communication (for example, communication networks). Examples of communication networks include local area networks (LANs), wide area networks (WANs), blockchain networks, and the internet.

The computing system may include a client and a server. The client and the server are generally located far away from each other and typically interact with each other over communication networks. A relationship between the client and the server is generated by running computer programs on a computer that have a client-server relationship. The server may be a cloud server, also known as a cloud computing server or a cloud host, which is a host product in the cloud computing service system to overcome the shortcomings of high management difficulty and weak business scalability in the traditional physical hosts and VPS services.

It should be understood that variant forms of processes showed above may be used to reorder, add, or delete steps. For example, the steps according to the present disclosure may be executed in parallel, in sequence, or in a different order as long as expected results of the technical solutions in the present disclosure can be achieved, which is not limited herein.

The above specific embodiments are not intended to limit the present disclosure. Those skilled in the art should understand that various modifications, combinations, sub combinations, and replacements may be made based on the requirements and other factors.

## Claims

1. A control method for dual carbon, wherein an entire life cycle for the dual carbon is divided into at least two dimensions in time based on a duration of the dual carbon, and the control method comprises:
acquiring, for each of the dimensions, a carbon reduction measure, wherein the carbon reduction measure comprises at least one item of carbon reduction measure information;
acquiring a carbon reduction requirement curve, wherein the carbon reduction requirement curve is a carbon reduction result curve comprising all the dimensions, and a horizontal axis of the curve represents time; and
optimizing the carbon reduction measure aiming at the carbon reduction requirement curve, using an optimization algorithm and based on the carbon reduction measure information, to obtain a modification result.

2. The control method according to claim 1, wherein the carbon reduction measure information comprises at least one of an indicator, an effective period, a task plan, output data, and operation data for the carbon reduction measure.

3. The control method according to claim 2, wherein the modification result is obtained by:
calculating a carbon reduction curve for the carbon reduction measure based on the carbon reduction measure information;
determining a combination of carbon reduction measures for the dimension based on endowment conditions and the carbon reduction curve for the carbon reduction measure, wherein the endowment conditions comprise at least one of technological maturity, economic efficiency, a carbon reduction result, availability, resource endowment, and security; and
modifying the task plan and the output data in the combination, to achieve collaborative optimization for the entire life cycle.

4. The control method according to claim 3, wherein the determining the combination of carbon reduction measures comprises:
sorting the carbon reduction measures in order of priorities based on at least one of the endowment conditions; and
determining, based on the priorities, the combination and an output of each of the carbon reduction measures in the combination.

5. The control method according to any one of claims 2 to 4, wherein the modification result is obtained by:
acquiring data on factors related to the carbon reduction measure, wherein the data on factors related to the carbon reduction measure comprises at least one of dual carbon policies and regulations, dual carbon standards, organizational operation development plans, organizational operational safety requirements, and technological development of the carbon reduction measure; and
modifying, based on the factors related to the carbon reduction measure and the carbon reduction measure, the task plan and the output data of the carbon reduction measure, to achieve a carbon reduction result conforming to the carbon reduction requirement curve.

6. The control method according to claim 5, wherein the modification result is obtained by:
monitoring the data on factors related to the factors related to the carbon reduction measure and updating the data on factors related to the carbon reduction measure in real time;
monitoring an operation status of the carbon reduction measure and acquiring the operation data of the carbon reduction measure in real time; and
modifying the combination and the output of the carbon reduction measure based on the updated data and the acquired operation data in real time, to achieve closed-loop dynamic optimization throughout the entire life cycle for the dual carbon.

7. The control method according to claim 6, wherein the modifying the combination and the output of the carbon reduction measure comprises:
modifying, in the dimension, the carbon reduction measure to obtain a synergistic optimized combination of carbon reduction measures and the output of the carbon reduction measure; or
modifying, between the dimensions, the carbon reduction measure to obtain a synergistic optimized combination of carbon reduction measures and the output of the carbon reduction measure.

8. The control method according to claim 1, wherein the optimization algorithm comprises at least one of a deep learning algorithm, an ant colony optimization algorithm, a particle swarm optimization algorithm, and an entropy weight algorithm.

9. A control apparatus for dual carbon, comprising:
a carbon reduction measure acquisition module configured to acquire, for each of dimensions, a carbon reduction measure, wherein the carbon reduction measure comprises at least one item of carbon reduction measure information;
a requirement curve acquisition module configured to acquire a carbon reduction requirement curve, wherein the carbon reduction requirement curve is a carbon reduction result curve comprising all the dimensions, and a horizontal axis of the curve represents time; and
a dual carbon optimization module configured to optimize the carbon reduction measure aiming at the carbon reduction requirement curve, using an optimization algorithm and based on the carbon reduction measure information, to obtain a modification result.

10. An electronic device, comprising:
at least one processor; and
a memory connected in communication with the least one processor, wherein
the memory stores a computer program executable by the at least one processor, and wherein the computer program, when executed by the at least one processor, causes the at least one processor to perform the control method according to any one of claims 1 to 8.

11. A computer readable storage medium, wherein the computer readable storage medium stores computer instructions that, when executed by a processor, cause the processor to perform the control method according to any one of claims 1 to 8.

12. A computer program product comprising a computer program that, when executed by a processor, causes the processor to perform the control method according to any one of claims 1 to 8.
